# EUROPEAN PATENT APPLICATION

(11) **EP 4 811 201 A1**
(43) Date of publication of application: **23.09.2026**
(21) Application number: 25164083.5
(22) Date of filing: 17.03.2025
(51) Int. Cl.: G06F 21/64, G06Q 20/38, H04L 9/00, H04L 9/40, H04L 9/32

(54) **COMMUNICATION BETWEEN NETWORKS**

(71) Applicant: QPQ AG, 6300 Zug (CH)
(72) Inventor: EVERETT, Craig, 6300 Zug (CH); IVANOV, Dimitar, 6300 Zug (CH); CHEW, Gregory, 6300 Zug (CH); WIGER, Ulf, 6300 Zug (CH)
(74) Representative: Murgitroyd & Company

(57) **Abstract**

A system and computer-implemented method for facilitating communication and interoperation between heterogenous networks in an ecosystem of networks is described. Distributed ledger technology is used to provide a first network among the ecosystem of networks with a permissionless core, such as a blockchain. At least a subset of the networks are blockchain networks. The ecosystem comprises regulated and/or unregulated networks that are linked through their engagement with the permissionless core of the first network. Transactions spanning independent networks in the ecosystem benefit from a combination of regulatory oversight and decentralized, algorithmically safe permissionlessness. Transactions between distinct unregulated networks (such as different blockchain networks) and transactions between regulated and unregulated networks (such as between central currency markets and cryptocurrency) are each facilitated with no trusted intermediary.

## Description

### FIELD

The present specification relates to communication between networks. In particular, the present specification provides computer-implemented systems and methods for facilitating communication and interoperation between heterogenous blockchain networks.

### BACKGROUND

Blockchain networks, in particular permissionless blockchain networks, offer safe (i.e. algorithmically secure) and cost-effective transactions without a central authority.

Conventional transaction systems rely upon time-honored, localized and regulated transaction protocols.

Wider adoption of blockchain technologies to replace or supplement conventional transaction systems is limited by a number of factors such as: a perceived inability to scale without compromising the permissionless nature of the technology; incompatibility with regulation and legal enforcement; a lack of a clear path away from price volatility; lack of convenience; and limitations in trust through cryptographic proofs for more complex transactions.

It has proved extremely hard to apply regulation in a permissionless domain, without undermining either the permissionless nature of the domain or the enforceability of the regulations.

There is no apparent way to guarantee safe value transactions between two blockchain networks that have no intrinsic knowledge of each other and no way to trust the other party.

### SUMMARY

It is an object of the present disclosure to combine the strengths of local, well-regulated transaction systems, on the one side, and a decentralized, algorithmically safe permissionless networks, on the other side.

It is a further aim to support permissionless transactions, and a permissionless currency, in the domain where it can provide the greatest value: namely, the gap between regulated domains and/or private actors. In this space, algorithmically safe transactions actually improve on the current state.

According to a first aspect of the present disclosure, there is provided a computer-implemented method for communication between networks in a system of networks, the system including a parent chain, PC, network with a permissionless core and a plurality of associate chain, AC, networks to which the PC network is coupled. The method comprises: maintaining a data record corresponding to value on the permissionless core of the PC network; and modelling footprints of each of the plurality of AC networks as first class objects on the data record to form a consensus, wherein each footprint has a corresponding AC anchoring point state in the permissionless core, and wherein each AC network retains one or more AC operators having authority to update the state of the AC anchoring point.

The plurality of AC networks may include a first AC network having a first footprint on the permissionless core and the method may further comprise: receiving a first proposal for a transaction from a first account in the first AC network; publishing the first proposal in a proposal pool of the permissionless core, the proposal pool being configured to allow AC operators for the plurality of AC networks to monitor proposals; receiving authorization for the first proposal from at least one AC operator of the first AC network; processing the first proposal based on the authorization by signing the authorized first proposal; and updating the AC anchoring point state for the first AC network by building a first transaction record based on the authorized first proposal and posting the first transaction record to the first footprint. The processing of the first proposal may be conditional upon receiving authorization for the first proposal from a majority of the one or more AC operators of the first AC network. The first transaction record may correspond to a first transfer transaction exporting a first token amount from the first AC network to the PC network.

In certain embodiments, the plurality of AC networks further includes a second AC network having a second footprint on the permissionless core, the method may further comprise: receiving a second proposal for a transaction from a second account in the second AC network; publishing the second proposal in the proposal pool of the permissionless core; receiving authorization for the second proposal from at least one AC operator of the second AC network; processing the second proposal based on the authorization by signing the authorized second proposal; and updating the AC anchoring point state for the second AC network by building a second transaction record based on the authorized second proposal and posting the second transaction record to the second footprint, the second transaction record corresponding to a second transfer transaction exporting a second token amount from the PC network to the second AC network. The processing of the second proposal may be conditional upon receiving authorization for the second proposal from a majority of the one or more AC operators of the second AC network.

The first transaction record may extract value from the first AC network corresponding to the first token amount and the second transaction may insert a further value in the second AC network corresponding to the second token amount, wherein the first transaction record has a corresponding first footprint transaction in the PC network and the second transaction record has a corresponding second footprint transaction in the PC network, wherein the first and second AC networks likewise record the corresponding completion of the first and second transaction respectively, potentially charging processing fees as stipulated by each chain.

According to a further aspect of the present disclosure, there is provided a non-transitory machine-readable medium that stores a set of instructions that, when executed by at least one processor, causes the at least one processor to facilitate communication between networks in a system of networks, the system including a parent chain network with a permissionless core and a plurality of associate chain networks to which the parent chain network is coupled, the instructions causing the at least one processor to: maintain a data record corresponding to value on the permissionless core of the parent chain network; and model footprints of each of the plurality of associate chain networks as first class objects on the data record to form a consensus, wherein each footprint has a corresponding anchoring point state in the permissionless core, and wherein each associate chain network retains one or more associate chain operators having authority to update the state of the corresponding anchoring point.

According to another aspect of the present disclosure, there is provided a communication system for facilitating communication between networks in a system of networks, the system of networks including a parent chain network with a permissionless core and a plurality of associate chain networks to which the parent chain network is coupled, the mediator system comprising: at least one processor; and at least one memory configured to store a set of instructions that, when executed by the at least one processor, causes the at least one processor to: maintain a data record corresponding to value on the permissionless core of the parent chain network; and model footprints of each of the plurality of associate chain networks as first class objects on the data record to form a consensus, wherein each footprint has a corresponding anchoring point state in the permissionless core, and wherein each associate chain network retains one or more associate chain operators having authority to update the state of the corresponding anchoring point.

Various further aspects and embodiments of the invention are provided in the accompanying independent and dependent claims.

It will be appreciated that features and aspects of the invention described above in relation to the first and other aspects of the invention are equally applicable to, and may be combined with, embodiments of the invention according to the different aspects of the invention as appropriate, and not just in the specific combinations described above. Furthermore, features of the dependent claims may be combined with features of the independent claims in combinations other than those explicitly set out in the claims.

### BRIEF DESCRIPTION OF DRAWINGS

Embodiments of the present invention will now be described by way of example only with reference to the accompanying drawings where like parts are provided with corresponding reference numerals and in which:
Figure 1 provides a schematic diagram of a single network;
Figure 2 schematically illustrates a plurality of networks;
Figure 3 schematically illustrates a tree structure within the networks of Figure 2, the networks including a parent chain and a plurality of associate chains networks;
Figure 4 schematically illustrates a sub-tree structure within the networks of Figure 2, the sub-tree including a subset of the plurality of networks;
Figure 5 schematically merges the tree structure of Figure 3 and the sub-tree structure of Figure 4;
Figure 6 schematically illustrates an inter-chain gossip network between nodes of the plurality of networks in Figure 2;
Figure 7 schematically merges the tree structure of Figure 3 and the sub-tree structure of Figure with the inter-chain gossip network of Figure 6;
Figure 8 schematically illustrates a prior art exchange or gateway for negotiating transactions between respective networks of the plurality of networks in Figure 2;
Figure 9 illustrates operations in a subset of the nodes of the parent chain in Figure 3;
Figure 10 illustrates an interaction between a node within an associate chain and the parent chain nodes illustrated in Figure 9;
Figure 11 is a schematic diagram illustrating the method for communication between networks in a system of networks in accordance with the present disclosure;
Figure 12 is a schematic diagram illustrating operations for updating a first anchoring point state in accordance with an aspect of the present disclosure; and
Figure 13 is a schematic diagram illustrating operations for updating a second anchoring point state in accordance with a further aspect of the present disclosure.

### DETAILED DESCRIPTION

Using a distributed ledger technology (DLT), digital data can be replicated, shared, and synchronized across a plurality of geographically distributed across many sites, institutions, and/or countries with no single. central authority. Implementation of a distributed ledger typically requires a peer-to-peer (P2P) computer network and a protocol for validating new information to which the peers collectively adhere (a so-called "consensus algorithm") so that the ledger is reliably replicated across the distributed nodes (e.g. clients and servers) participating in the network.

In distributed ledger technology, the digital data is inherently resistant to modification. Once the digital data is synchronized, it is known collectively as a "distributed ledger". A system that is capable of producing and maintaining a distributed ledger may be referred to as a "distributed ledger platform".

Blockchain technology is an example of distributed ledger technology. Examples of distributed ledger platforms include blockchain platforms.

Blockchain technologies are logically constructed around fundamental, independent entities referred to as "first-class objects". Examples of first-class objects in blockchains include transactions (which carry data about asset transfers and the operation of logic upon that data), tokens, smart contracts, and accounts (uniquely identifiable entities that hold, receive or send assets).

In blockchain technologies, objects (e.g. transactions) are ordered, hashed, and formed into blocks on an ongoing chain (a "blockchain"). The ordering of objects may include timestamping but this is not universal: in distributed systems for example, timestamps are not reliable for ordering but may be added as useful metadata. This blockchain records and verifies transactions across a decentralized network without reliance on a central authority and is thus an example of a distributed ledger.

Distributed ledger technology addresses one of the fundamental challenges of the internet, namely trust. Distributed ledger technology offers a means for rendering data immutable for practical purposes so that trust can be established without the need for a trusted third party/authority.

In the seminal white paper "Bitcoin: A Peer-to-Peer Electronic Cash System", Satoshi Nakamoto describes a blockchain network that is open and decentralized. Participants can freely join, leave, and interact without needing prior approval or authorization from a central entity. The Bitcoin system uses these characteristics to establish an electronic payment system. Distributed ledger systems that operate like the Bitcoin system are referred to as "permissionless networks". The Bitcoin system exhibits several key characteristics of a permissionless network:
**Decentralized Control:** The network does not rely on a central authority or trusted third party to validate transactions. Thus, the Bitcoin system uses a peer-to-peer network where any participant, or node, can join or leave at will. No permission is needed from a central entity to participate in this network.

**Consensus:** The Bitcoin system's consensus mechanism relies on "proof-of-work" (PoW), allowing participants to validate transactions and create new blocks provided they can prove they have performed a known computational task, the completion of which is expected to require expenditure of a given amount of computational effort. The task may be inherently random so that the actual amount of computational effort may not be known: for instance, the task may be calibrated so that it will take on average x minutes for a given processor to find a solution, without completely ruling out scenarios where a solution might be found immediately. The process is open to any participant with the necessary computational resources, again ensuring no permissions or approvals are required from a central authority.

**Open Participation:** Transactions are broadcast to all nodes in the network, and blocks are added to the chain through a competitive process that rewards computational effort. This open participation ensures that anyone can contribute to maintaining the network and verifying transactions without needing prior consent or credentials.

**Anonymity and Pseudonymity:** The use of cryptographic keys allows participants to remain anonymous or pseudonymous, further indicating that no permission or identity verification is required to engage with the network.

The original Bitcoin paper proposed "an electronic payment system based on cryptographic proof instead of trust, allowing any two willing parties to transact directly with each other without the need for a trusted third party": mass adoption was envisaged. Constructing a globally scalable, practically usable permissionless network for electronic payment has however proved extremely difficult. One obstacle has been the absence of a clear way to manage the transition from legacy regulated markets, or even to achieve a balanced co-existence of regulated and unregulated transaction systems.

This is important not least because existing economic actors have no choice but to remain tethered to some jurisdiction, interacting with other actors equally constrained within regulatory limits. National and supranational bodies seek to provide regulations that can govern transactions in a fundamentally unregulated domain, but this has proved challenging using conventional structures.

The focus of the Bitcoin paper was upon electronic payment and Bitcoin has become a significant example of a "cryptocurrency", i.e. a currency in which the blockchain ensures transparency in financial transactions. Blockchain serves as the foundational technology behind cryptocurrencies other than Bitcoin, for example Ethereum.

In each of these cryptocurrencies, a blockchain serves as a notionally decentralized, immutable ledger that records all transactions of the currency. Each transaction is stored in a "block," which is cryptographically linked to the previous block, forming a "chain." The chain is then distributed to all participants in the currency. In this way, the blockchain ostensibly ensures transparency, security, and traceability of all financial transactions in the network. Strictly speaking, blockchain algorithms can only approximate these qualities since they rely on a variety of statistical thresholds and incentive structures.

Cryptocurrencies rely on blockchain to enable decentralized financial systems, in contrast to the control exerted by central authorities like governments and banks over conventional currencies. In principle, cryptocurrencies eliminate the need for intermediaries, reducing costs and increasing the accessibility of financial services globally.

Cryptocurrencies use blockchain to achieve permissionless (i.e. trustless) transactions. Participants in the network do not need to trust one another; instead, they rely on the blockchain's consensus mechanisms (such as Proof of Work, PoW, or Proof of Stake, PoS) to validate and secure transactions. This makes the system highly resistant to fraud and manipulation.

Blockchain platforms like Ethereum extend the relationship between blockchain and currency by enabling programmable money through smart contracts. These are self-executing contracts with predefined rules encoded on the blockchain, facilitating automated and conditional transactions.

In effect, Bitcoin uses a decentralized network to process transactions, allowing users to send and receive payments without intermediaries. Ethereum extends this functionality with smart contracts, enabling complex financial interactions.

The fundamental concept of a DLT platform can be used in a range of new system applications that go beyond the cryptocurrency domain, such as to secure, record and verify transactions between different systems in a centralized and/or decentralized distributed network. However, as the number of transactions handled by a DLT platform grows so does the ledger storage and processing requirements, thereby significantly impacting the scalability of the platform, resulting in a system that is slower, more expensive and less sustainable over the long term.

Problems preventing wider adoption of blockchain technologies, and in particular currencies based on blockchain technologies, include: a perceived inability to scale without compromising their permissionless nature; incompatibility with regulation and legal enforcement; a lack of a clear path away from price volatility; lack of convenience, largely due to lack of trust actors; and trust in cryptographic proofs is only feasible for very basic transactions.

There is interdependence between these problems. For widespread acceptance of a currency as real money, it must be easy to handle; convenience comes in large part through the help of trusted agents and institutions. Trust is conventionally provided because these agents and institutions are subject to regulation.

There are also benefits in the operation of systems in the permissionless, unregulated domain. Permissionless networks offer safe and cost-effective transactions, including transactions across (i.e. within) regulated domains.

If a network of regulated systems can be carefully crafted around a permissionless core, the strengths of local, well-regulated system of transactions (with a commodity-based or fiat currency), on the one side, and a decentralized, algorithmically safe permissionless system (e.g. with a "proof-of-work" consensus-based cryptocurrency), on the other side, can be combined.

It is observed that no single consensus mechanism is adequate for every context of operation, and no single blockchain network is sufficient to handle the entire body of data that users of blockchain technologies would like to place on a distributed ledger. The absence of a unifying consensus mechanism has contributed to a proliferation of different blockchain technologies, each with slightly different consensus strategies and (typically) each with their own currency. This fragmentation forces users into the challenge of conducting transactions (e.g. transfers of value) between chains that are not aware of each other, in an unregulated space.

The absence of alternatives, e.g. traditional commercial actors, in that unregulated space has given rise to a surge in establishment of so-called exchanges (a misnomer, better understood as "crypto custodians"), bridges and gateways that solve the problems caused by the distributed nature of the technology by centralizing the solution all over again, simply at an external layer.

Performing transfers between independent chains via gateways in a permissionless space, lacking shared knowledge, places a critical requirement on the gateway to function honestly and correctly for the safe transfer of funds across chains. A gateway in such circumstances is referred to as a "gatekeeper" herein, to emphasize the need for honestly and correct function. This requirement upon a trusted third party undermines the notion of algorithmic safety promised through permissionless blockchain technology. Currently available cryptocurrency gateways introduce points of control and failure: a situation that runs counter to idea of the decentralized permissionless system.

The lack of more traditional commercial actors, combined with the lack of regulatory oversight, caused existing money and energy to be diverted towards a wild market for very high-risk investment, loan and auction offerings, promising unrealistic returns for early adopters.

This led to a loss of traditional market protections, such as deposit guarantees and access to arbitration or legal enforcement.

Rather than seeking technological solutions, companies and institutions have employed mitigation strategies. For example, banks in some countries refuse to deal with customers who engage in significant commercial activity on blockchains. Countries, and regional entities such as the EU, have worked hard to draft regulation to limit the risks introduced by the fragmented, permissionless cryptocurrency space.

The complex conditions necessary to realize the vision of a permissionless digital cash are not met, blocking the widespread adoption of cryptocurrency as money.

Moreover, the use cases for distributed ledger technologies are much broader than cryptocurrency. Existing blockchains that might support these other use cases force non-financial uses to compete for resources with financial uses, disincentivizing non-financial innovation.

The present invention will be illustrated using the accompanying Figures, which will be described in more detail below. It should be noted that any references made to dimensions are only indicative and do not restrict the present disclosure in any way. While this disclosure has been shown and described with reference to certain illustrated embodiments thereof, it will be understood by those skilled in the art that various changes in form and details may be made therein without departing from the scope of the invention encompassed by the appended claims.

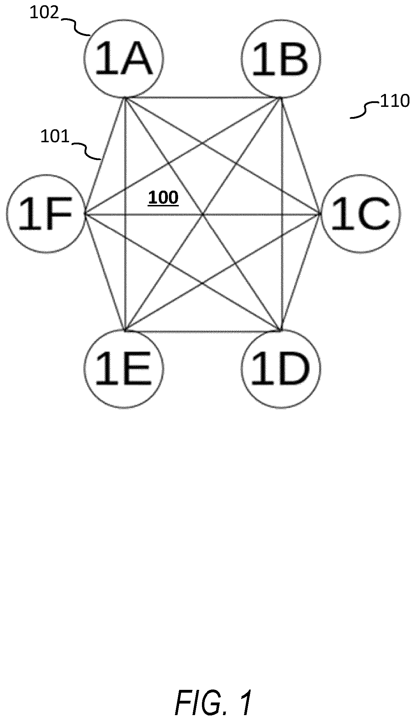

Figure 1 shows schematic diagram of a single network. The exemplary network 110 comprises a plurality of nodes 102 (nodes 1A through 1F) each of which represents a respective computing device (e.g. clients and servers) participating in the network. Within the network 110 there are a plurality of connections 101 (represented as black lines extending between nodes). These connections 101 are used to implement a "gossip protocol" where messages are sent to peers in the system and passed around (i.e. relayed) in such a way that every node will eventually see every message. In aggregate, the plurality of connections therefore forms an intra-chain gossip network 100. Every node does not have to connect to every other node as shown above, but it is necessary for every node to be able to connect to at least one other node. In a permissionless network, no node can afford the assumption that other nodes are honest. Therefore, being connected to only one or a few nodes increases the risk of certain attacks. This is why gossip protocols are generally favored for blockchains. A greater spread of connections from a given node increases the likelihood that a dishonest node will be identified, thus encouraging all nodes within the network to be honest.

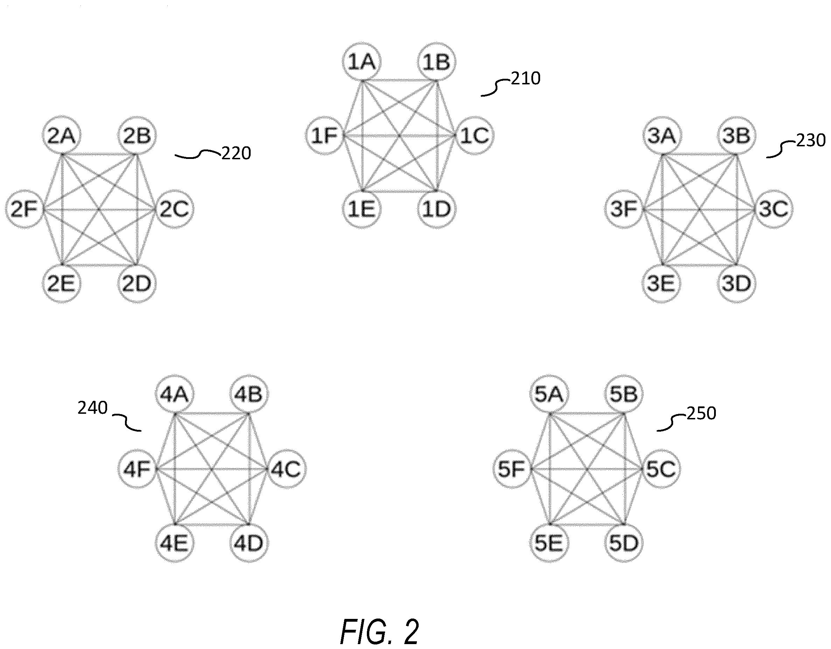

Figure 2 schematically illustrates a plurality of networks. Each of the networks in Figure 2 has the same structure of nodes and connections as the network in Figure 1: this is for the sake of illustration only, since networks may have different numbers of nodes and each node need not have a connection to every other node in its network. The networks may be chain networks based around respective blockchains.

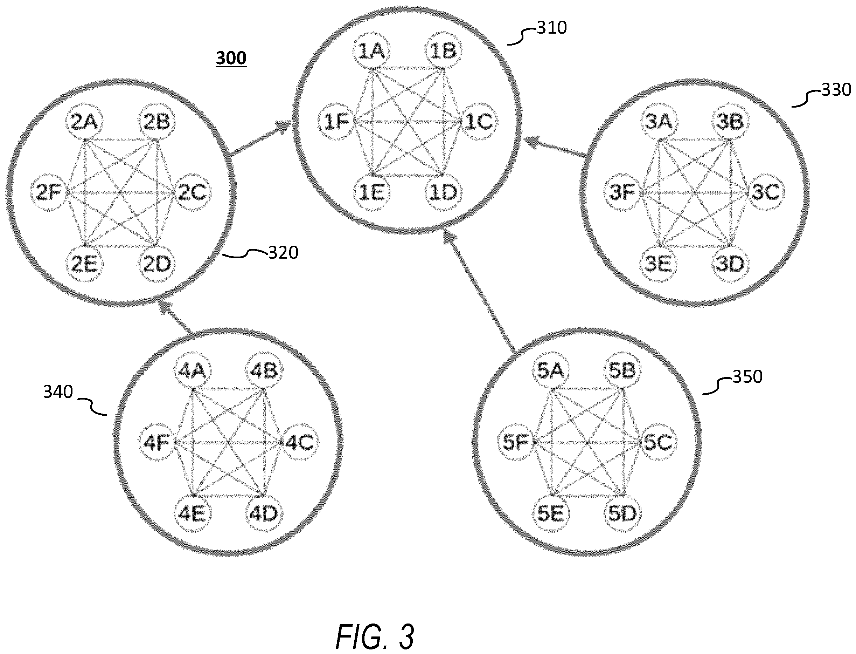

Figure 3 schematically illustrates a tree structure 300 within the networks of Figure 2, the networks including a parent chain network 310 and a plurality of associate chains networks (320, 330, 340, 350). The associate chain networks connect to the parent chain network, with the arrows indicating where each chain is anchored on another chain network via respective anchoring points. These arrows also illustrate the transfer path when moving value: the transfer needs to cross the anchoring points. In certain embodiments, such transfers are aggregated as part of bulk transfer transactions. The method of the present application permits each chain to participate in another chain's currency system.

The associate chain anchoring points may be implemented as a combination of transactions (e.g. create, deposit, rollup) and a state tree. The transactions may be whitelisted by the associate chain creator, such that only a limited set of accounts may post them. One such account could be a smart contract, e.g. implementing a community consensus algorithm. This implementation is then left to each associate chain operator.

The top level of the tree structure represents a parent chain network 310 a permissionless core from which a common currency originates, the currency being minted on the core. The parent chain network is the monetary authority for that currency. Other chains may participate in that currency but are not permitted to affect the money supply of any currency for which it is not the monetary authority.

Certain associate chain networks (320, 330, 350) are directly anchored in the parent chain network. Other associate chain networks, for example associate chain network 340, may be anchored to another associate chain network, that associate chain network may itself mint a currency of its own. To participate in a currency a chain network must pick a "parent" in the context of the currency, with the top-level parent chain network being the monetary authority itself.

The permissionless core of the parent chain network of the present disclosure is implemented as a properly decentralized blockchain and has no official operator. In certain implementations, the permissionless core may be a proof-of-work blockchain using the Bitcoin-NG consensus protocol. It will readily be appreciated that other suitable consensus mechanisms may be adopted to implement a suitable decentralized blockchain with no official operator. All associate chain networks participate in the tree structure and therefore all associate chain networks are "children" of the parent chain network in that context.

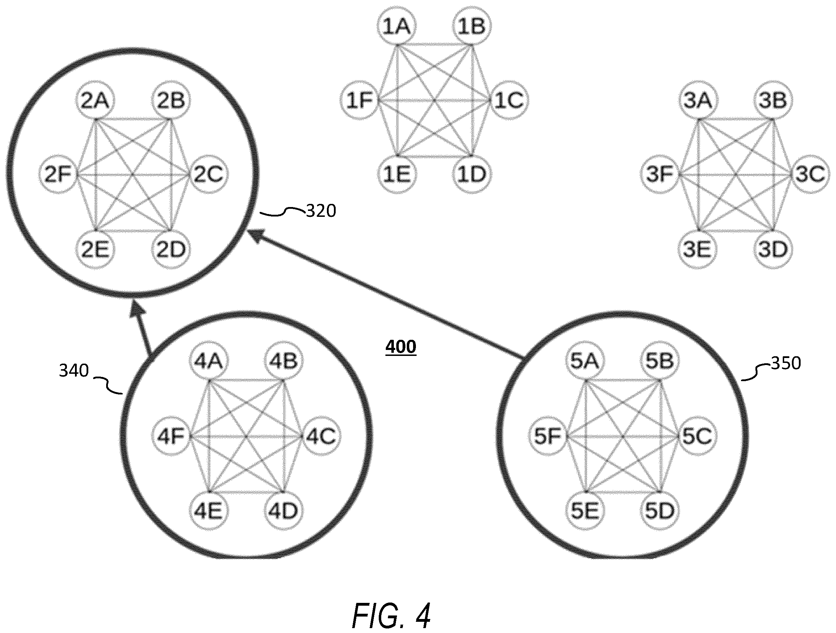

As noted above, a chain may define (i.e. mint) its own currency and act as the monetary authority for that currency. Figure 4 schematically illustrates a sub-tree structure 400 within the networks of Figure 2, the sub-tree including a subset of the plurality of networks (320, 340, 350).

For example, if the central bank of a country A were to create a digital version of their existing fiat currency, the Peso, the bank could operate a cash <-> digital exchange window, and smart contracts could then be written denominated directly in the Peso. Chains that wish to participate in the Peso would then become associate chains of the Peso.

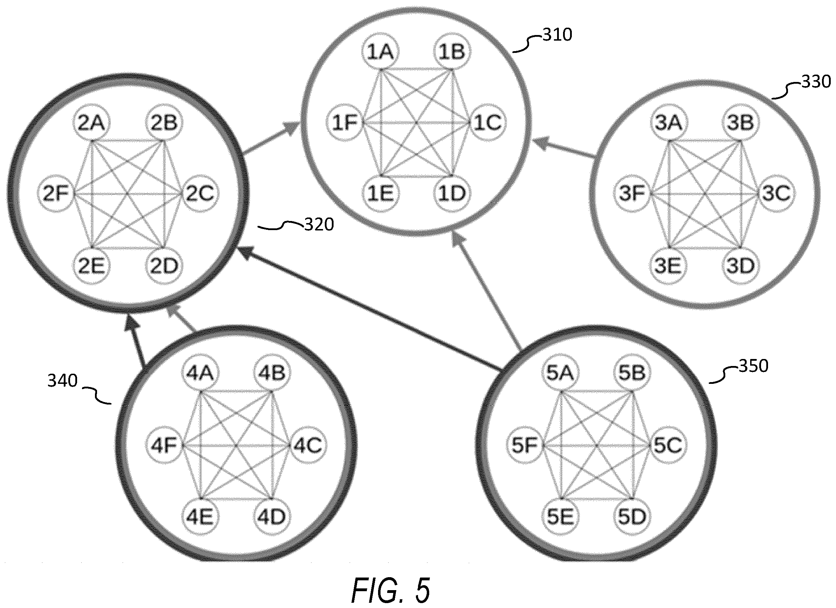

Figure 5 schematically merges the tree structure of Figure 3 and the sub-tree structure of Figure 4. As all chains participate in the common currency of the parent chain network by default, the integration effort of adopting the common currency would be identical to that of adopting the Digital Peso, the difference between the two being a local setting from the perspective of users.

As is indicated in Figure 5, the monetary authority for the common currency of the parent chain network is the parent chain 310 and the monetary authority for the Peso is associate chain network 320.

Normal user accounts (aka "plain old accounts" or "POAs") are universal across the entire system (i.e. the network of chain networks). A POA on associate chain network 340 is the same POA on associate chain network 350, though the balances on each associate chain network may be different. POAs can transfer funds between instances of the POA on respective associate chain networks. The route of these intra-chain transfers must travel along the lines of monetary authority established by the monetary authority graph (the combined sets of arrows shown in Figure 5), passing through the nearest common parent in the context of the currency being transferred. Transaction signatures are chain-specific and cannot be replayed on another associate chain network in the ecosystem.

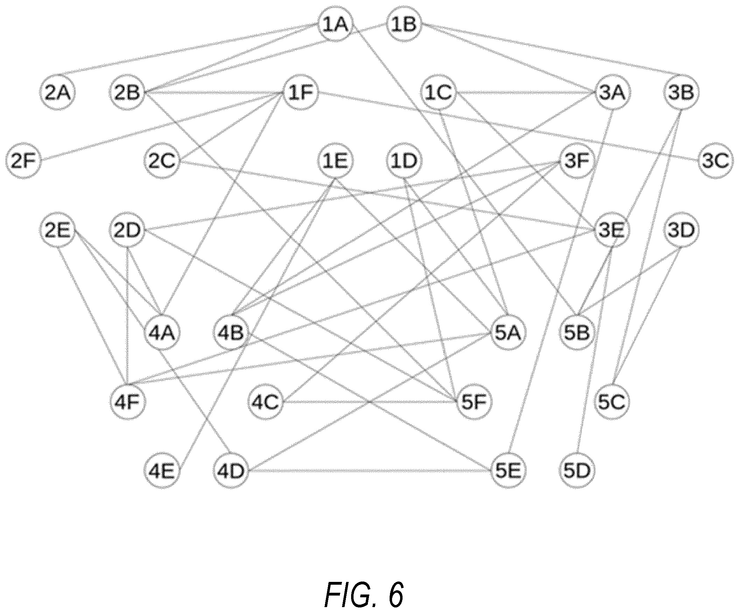

Figure 6 schematically illustrates an inter-chain gossip network 600 between nodes of the plurality of networks in Figure 2. Inter-chain transfers can be aided by a global inter-chain gossip network that is separate from the intra-chain gossip networks 100 shown in Figures 1 and 2. In certain embodiments, a global gossip network may be employed that carries (i.e. relays) messages that relate to the establishment of new chain networks and the transfer of funds between chain networks.

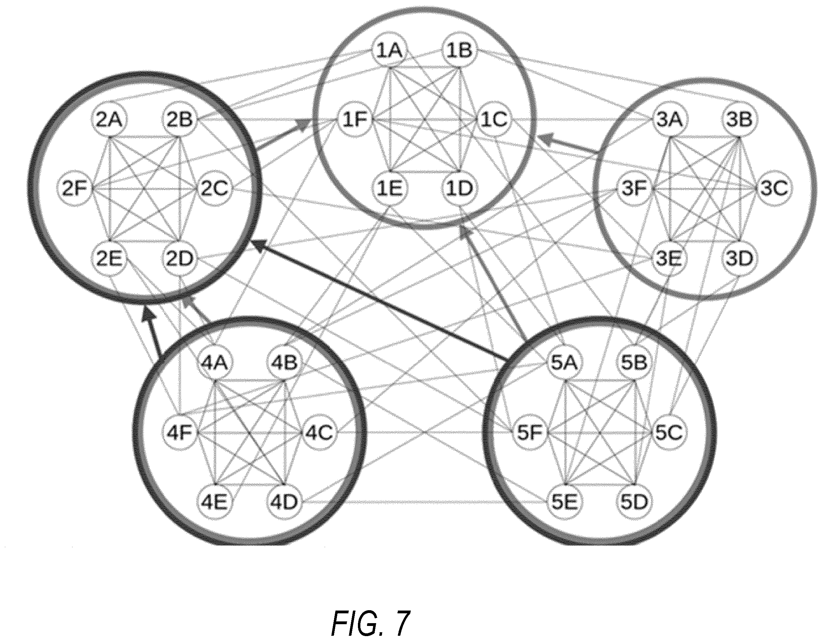

Figure 7 schematically illustrates an architecture that merges the tree structure 300 of Figure 3 and the sub-tree structure 400 of Figure 4 with the inter-chain gossip network 600 of Figure 6. The resulting architecture is the basis for a decentralized, global cryptocurrency, partitioned across multiple chains while also providing a basis for the creation of hybrid or digital fiat currencies, such as the Peso. The entire system functions without the need for gatekeepers.

The architecture described above enables a number of significant features:
- A network of blockchain networks that does not require trust in third-party gateways.
- A universal account system for users across the entire ecosystem of chain networks.
- A way to create multiple currencies across the ecosystem, each of which can be managed, operated and regulated in different ways, independently.
- A way to manage and regulate different chain networks in various jurisdictions without giving up the ability to interoperate with the global ecosystem.
- A way to define stake in a meaningful way within governance structures (the common currency of the parent chain network can form the basis of a meaningful staking system because they are created by PoW on the Mint, act as a universal currency for wholesale and retail settlements, and can be used as the basis for staking on associate chains).

Performing transfers between independent blockchain networks has conventionally required the adoption of gateways. These gateways operate in a permissionless space so that the participating blockchain networks lack shared knowledge. This means parties to the transaction must rely upon the gateway to function honestly and correctly for the safe transfer of value between the blockchain networks. Dishonest control of the gateway, dishonest actors using the gateway and/or failure of the gateway expose the parties to risk.

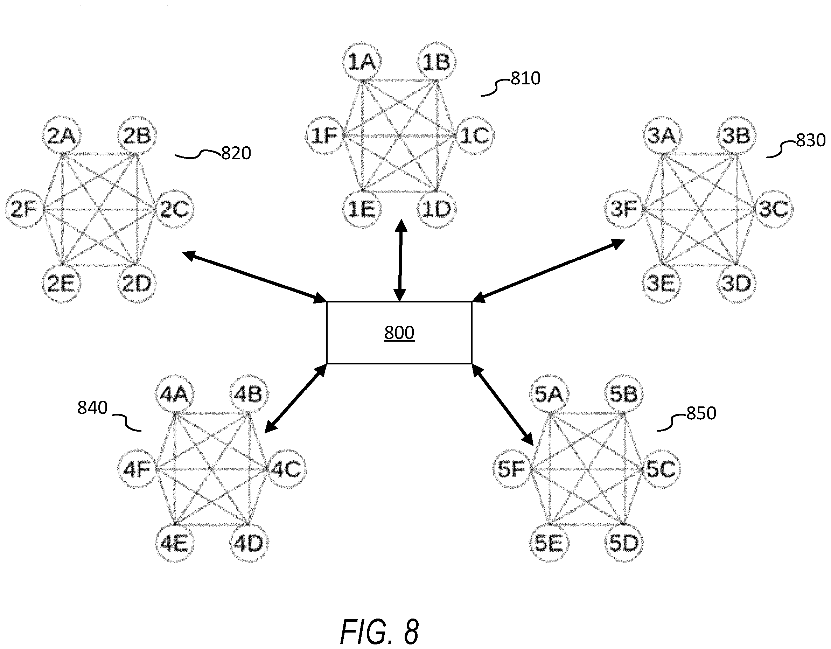

Figure 8 schematically illustrates a prior art exchange or gateway 800 for negotiating transactions between respective networks of the plurality of networks in Figure 2.

The present application describes the fusion of a properly decentralized blockchain system with traditionally regulated financial systems, without having to depend on custodial gateway providers or "exchanges".

In accordance with an example of the present application, there is a network of systems having a parent chain, PC, network having a permissionless core coupled to a plurality of associate chain, AC, networks. The plurality of AC networks may include a first AC network and a second AC network. The first and second AC networks may each be either a regulated system or an unregulated system.

In one embodiment, the method implements a permissionless Mint based on Proof-of-Work mining and an evolved version of the Bitcoin Next-Generation consensus protocol. This consensus protocol retains the intuitive robustness of Bitcoin but adds quick response time and much improved throughput. The PC network has a currency (based on proof-of-work consensus, for example) that is managed in a way similar to the operation of a national banking system. In such systems, the Mint (or Central Bank) is responsible for the total money supply, and distributes funds to local banks, which interact with the markets. In this analogy, the permissionless core serves as the Mint 'issuing' a universal currency, the "PC currency", and the associate chain networks are (or act as) the local banks.

The permissionless blockchain core supports, as first-class objects, unique representations ("anchoring points") of participating associate chain networks and their total aggregated supply of a common currency, the PC currency.

The structure of the PC network may be replicated in one or more of the participating associate chain networks. Each AC network might then serve as a Mint for its own currency but need not itself be permissionless. The top-level Mint (i.e. the core of the PC network) must however be permissionless, ensuring that the universal currency for the network of chains is not controlled by any actor or group of actors.

Consistency for conventional banking systems is achieved through nightly processing of transaction logs, and occasionally through manual audits and reconciliations.

In the exemplary PC network, consistency guarantees on the permissionless core must be consensus-driven due to its permissionless nature.

The AC footprint representation must be part of the PC network's consensus in order to make it the reference point for consistency guarantees.

Thus the PC network provides a standard anchoring point, an account specification and a currency for each participating AC network, but leaves all other decisions to the AC network.

The AC network is solely responsible for providing a suitable consensus and visibility parameters for its purpose, and for managing the value supply it has checked out from the PC network. It cannot exceed the total supply reflected in the state of the anchoring point. No AC network can therefore transfer value safely to another AC network without passing through the anchoring point, updating the anchoring point state. The AC network is not required to reveal the specifics of individual transfers, enabling the presence of private AC networks, where only the parameters of the anchoring point need be outwardly visible.

Authority to sign transactions modifying the AC anchoring point and footprint reside with one or more AC-appointed operators. Selection of such operators is left to the governance procedures of the AC network: crucial since the AC network is assumed to reflect a regulated or private domain.

In summary, the permissionless core of the PC network side is entrusted only with algorithmically securing the aggregated state (total footprint and access control list) of an anchored AC network. All other operations of the AC network become the responsibility of the AC network (i.e. the operators of the AC network), and thus amenable to regulation.

The method may further include a routine for achieving timely finality to ensure that cross-chain transfers can settle within a few minutes.

In one scenario, appointed associate chain operators may operate nodes on the permissionless core of the PC network and ensure that cross-chain transfers are correctly mirrored on both sides of the transaction. Each side should wait until updates on the other chain have reached finality before performing the corresponding actions on its side.

In a further embodiment, the architecture of the present disclosure may operate a service to run State Channel Markets where the market operator is anchored to each supported chain network. Such markets could effect cross-chain transfers with instant finality and sub-second response time without violating the principles of the system. Such cross-chain State Channel traffic is made possible through the universal currency and account models.

In this case, the State Channel market operator, acting as a transfer agent, may use on-chain transfers through AC connection points in order to rebalance liquidity. The state channel markets service is an aggregated function, so that those transfers may be performed swiftly. Where the architecture is used to run State Channel Markets, the speed at which value can safely be moved between chains will be greatly increased when compared to the operation of conventional exchanges in state channel markets. This greater speed can be monetized.

While the preceding description concerns implementations of a permissionless blockchain that use Proof-of-Work mining as basis for a consensus model, alternative implementations are also contemplated such as those that use Proof-of-Stake. The top-level permissionless core in such alternatives is nevertheless designed to be properly decentralized.

Aspects of the anchoring points for associate chains may vary, however it is required that their state is part of the consensus of the PC network, while the responsibility and authority to update the state rests with the associate chain.

As the illustrated examples of associate chain networks in the present disclosure demonstrate, the associate chain networks may take any conventional form and may belong to either unregulated or regulated domain. Moreover, a given account may be appointed as an AC operator for more than one different associate chain network.

Just as national banks support a local currency, next to the universal currency of the central bank, associate chain networks (which may indeed be operated by regulated national banks) support a local currency (e.g. fiat currency, cryptocurrency). The local currency is, then, fully the responsibility of the AC operator(s) (e.g. local banks) while the PC currency may be considered a form of foreign currency (relative to each of the AC operators). It is up to the AC operator(s) to choose their adaptation to relevant legislation governing exchange between their local currency and the PC currency.

The permissionless core provides an efficient, algorithmically safe, permissionless resource and transaction layer through which transactions between the first and second associate chain networks may be mediated. In one example, the first associate chain network is a regulated system while the second associate chain network may be an unregulated system. A first transaction extracting value from the first associate chain network may be loosely associated with a second transaction inserting value in the second associate chain network without either AC network being required to trust the other. In the example, the first transaction has a corresponding first footprint transaction in the PC network and the second transaction has a corresponding second footprint transaction in the PC network. Each of the AC networks likewise records the completion of the first and second transaction respectively using the blockchain or similar ledger technology in the unregulated second AC network and conventional reconciliation in the regulated first AC network. While there is no association record connecting the two transactions on the PC, safety is achieved through the fact that transfers are between respective instances of the same account on each network. Therefore, funds cannot be stolen by a malicious intermediary.

The first AC network needs no mechanism to inspect the second AC network (and vice versa). Neither AC network has any facility to make any demands on the other AC network.

Within regulated markets, cryptocurrencies are typically classified as assets, rather than money. In order to be properly recognized as money, it needs to be possible to adapt existing legal frameworks to the currency and transactions using the currency. Associate Chains can be set up according to whatever regulatory requirements apply to a given market, KYC ("know your customer") being perhaps the most important requirement, but also quite possibly some form of license to be able to operate the chain as a commercial marketplace. Examples of the present application facilitate the reclassification of cryptocurrencies as money, on a par with fiat currencies.

Other exemplary applications of the present application relate to Central Bank Digital Currencies (CBDC). There is a strong incentive for Central Banks to offer an attractive alternative to emerging global digital transaction systems. The architecture described in the present disclosure may function as a global digital transaction system, but it may also offer both a connection point for a national Associate Chain network, and the possibility to manage a local currency on the same AC network. In such cases, the PC currency is treated as a foreign currency, whose price is primarily determined by (and stabilized by) the sum of all commercial activities executed within the PC/AC ecosystem.

National Banks are given the control they need to manage their own digital currency and they are connected to a globally accessible permissionless currency (the PC currency). Exchange between the local currency and the PC currency becomes extremely efficient, which unlocks economic potential, but also serves to dampen any incentives towards overeager regulation.

In certain examples, the Central Bank may instigate its own PC network, such that it serves as a Mint for its own currency. In this case, the Mint is not however a permissionless chain, but this is as it should be, for a national currency. As in other examples, ACs for the national currency may be either private or public. Local banks, for example would want to run a private chain, carefully selecting what is revealed, and to whom.

In another application, certain embodiments establish a way to connect blockchain networks and local markets such that value can be transferred safely across chains. The safe route, through the anchoring points of the ACs, possibly in several steps, is algorithmically safe, as long as one waits for finality in each step, so that the transaction is incapable of being reverted at each step. Compared to currently available foreign transfer solutions, this can be seen as quite fast, completing within minutes.

In a further application, certain embodiments support the safe digital representation of assets. Representing real-world assets on-chain faces two main challenges: representing assets, such as non-fungible tokens (NFTs), on a permissionless blockchain falls outside of regulated space, making the representation lack legal force. Storing asset representations on a blockchain that is isolated from other systems of storage of value means that the representation is little more than a database entry. More efficient databases are available, making the use of a blockchain representation less attractive.

Certain embodiments provide a blockchain that is equipped with a powerful Smart Contract system. As a result, real-world assets can be encoded (i.e. a digital representation instantiated) efficiently on-chain within a suitable jurisdiction. The status of the given AC network as a commercial marketplace means that the digital asset can be properly mapped to a monetary value and properly enforced.

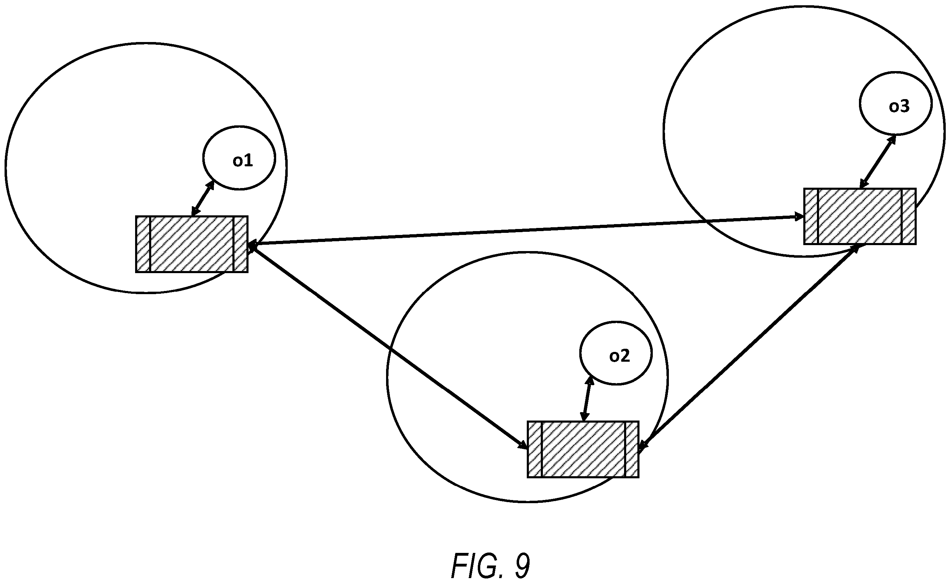

Figure 9 illustrates operations in a subset of the nodes of the PC network in Figure 3.

On the PC network, AC operators monitor an AC proposal pool (e.g. a "mempool"), to which proposals are published (i.e. posted) in order to perform a deposit, rollup or update operation.

Each AC operator can fetch a proposal, inspect it and authorize it with a signature. The mempool merges the signatures of authorizing AC operators until a requisite majority has been achieved. After this, one of the AC operators (this may be the depositor, in the case of deposits) may build a transaction record based on the proposal and post it to the chain mempool.

The transaction record of the proposal contains a subset of the fields needed for the final transaction. In order to sign, it is serialized into a binary object, to which the network id (for the AC network) is added. This is to ensure that proposals, once authorized, cannot be replayed on the same chain or another chain.

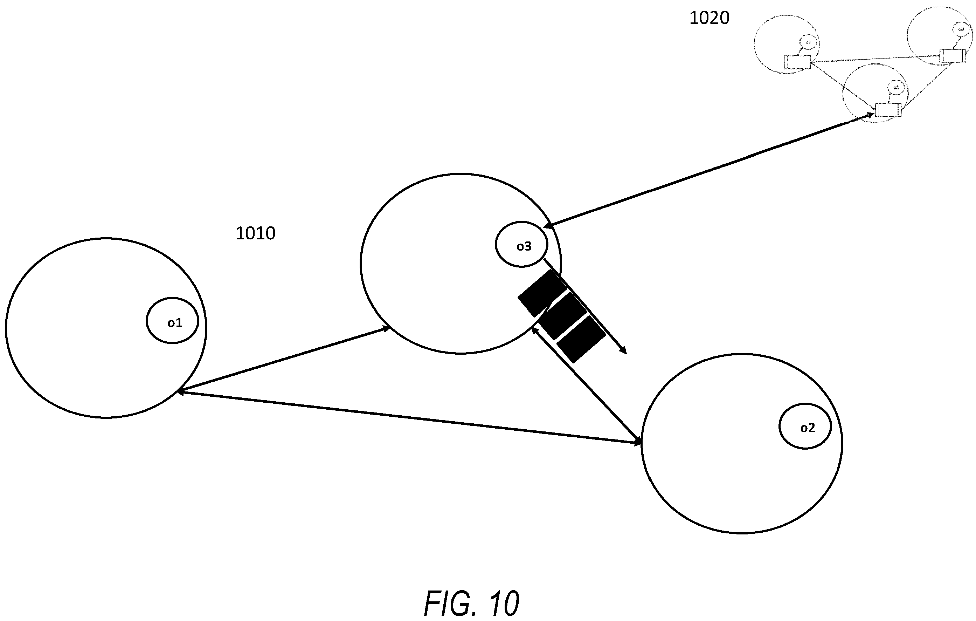

Figure 10 illustrates an interaction between a node within an associate chain and the PC nodes illustrated in Figure 9. The illustrated interaction deals with a deposit transaction.

On the AC network, the same AC operators may operate a permissioned consensus by taking turns as block producers.

Whenever an AC operator is elected to produce a block, it collects deposit requests on the PC network that have reach finality, but not yet been served. For each such deposit, the AC operator posts a corresponding transaction on the AC network. The elected AC operator then collects burn/withdraw requests on the AC network which have reach finality, but have not yet been served, and finally gathers all such requests into a rollup request, and publishes (i.e. posts) that request as a proposal on the PC network.

The publishing (i.e. posting) of an approved proposal on the PC network, may comprise: for deposits, the depositor monitors the proposal pool and posts the deposit (i.e. exports a deposit value) once it has been authorized; alternatively, the operator who adds the signature required to reach a quorum could post the transaction; or the current AC block producer could scan the PC proposal pool for proposals approved but not yet served.

Even deposits, however, need AC operator approval, as the AC chain operators must be able to control the flow of assets both into and out of their chain.

In depositing value onto the AC network, an account exporting (i.e. transferring) value from the PC network to the AC network posts an 'AcDepositTx' transaction. The depositor's (i.e. sender's) account is also valid on the AC network. The transfer transaction needs to contain the following elements: an AC state object id; a depositor account id; an amount deposited; and a list of AC operator signatures, approving the operation. Optionally, the transfer transaction contains an 'Ac_fee' field, this establishes how much the AC operators can receive and use for transaction fees on the AC.

The AC operators must be in control of transmissions both into and out of the AC network, so neither deposit or rollup transactions are accepted on the PC network until the requisite number of operators have authorized the operation.

As a result of the above, the described ecosystem of blockchain networks supports permissionless transactions, and a permissionless currency, in the gap between regulated domains and/or private actors (where the ecosystem architecture can provide the greatest value). The algorithmically safe transactions in this architecture improve on the current state (i.e. the use of exchanges, gateways, and the like).

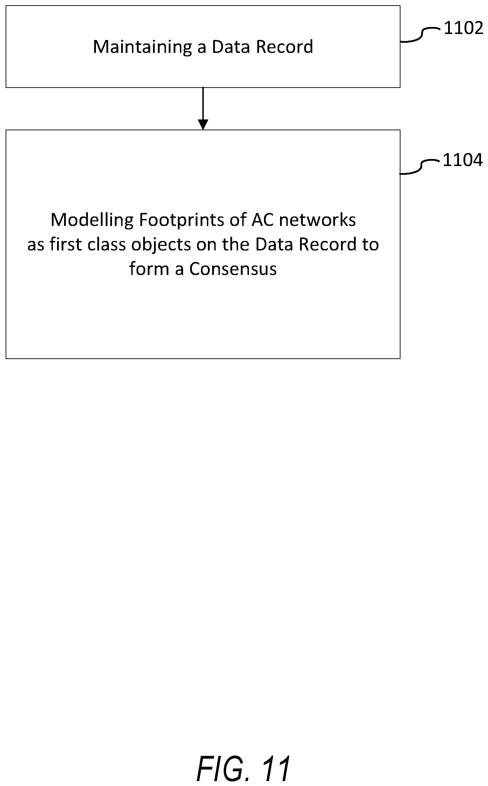

Figure 11 is a schematic diagram illustrating the method for communication between networks in a system of networks in accordance with the present disclosure. The system includes a parent chain, PC, network with a permissionless core and a plurality of associate chain, AC, networks to which the PC network is coupled. The method comprises: maintaining 1102 a data record corresponding to value on the permissionless core of the PC network; and modelling 1104 footprints of each of the plurality of AC networks as first class objects on the data record to form a consensus, wherein each footprint has a corresponding AC anchoring point state in the permissionless core, and wherein each AC network retains one or more AC operators having authority to update the state of the AC anchoring point.

An initial transaction for creating the AC footprint in the PC data record may be an 'AcCreateTx' transaction posted and signed by one user, who is technically the owner of the object. This transaction does not go to the proposal pool. The creation transaction contains a list of AC operator identities and an initial amount allocated to the AC. In certain embodiments, the 'owner' account is also a member of the operators list; in other cases, the owner account is not a member. In certain embodiments, the 'owner' account, which creates the AC connection point, is also the only account that can update the list of operators. In other embodiments, a majority vote from the listed operators is required in order to finalize an operator list update transaction: the operator list update transaction is handled as a proposal.

By carefully adding just enough state to the permissionless core (minting the common permissionless currency of the PC network) to enable safe transfer of value across chain networks, the permissionless currency can expand into regulated domains, subject to the (hopefully reasonable) constraints of each, and allow market actors to use the permissionless currency as real money without clashing with authorities. While the anchoring point is necessarily part of the consensus on the permissionless core, control over its updates necessarily resides with the operators of the AC - whether that is a community or a legal entity. This combination is what enables the permissionless currency to be accessible everywhere, while still under regulatory control when used inside a given jurisdiction.

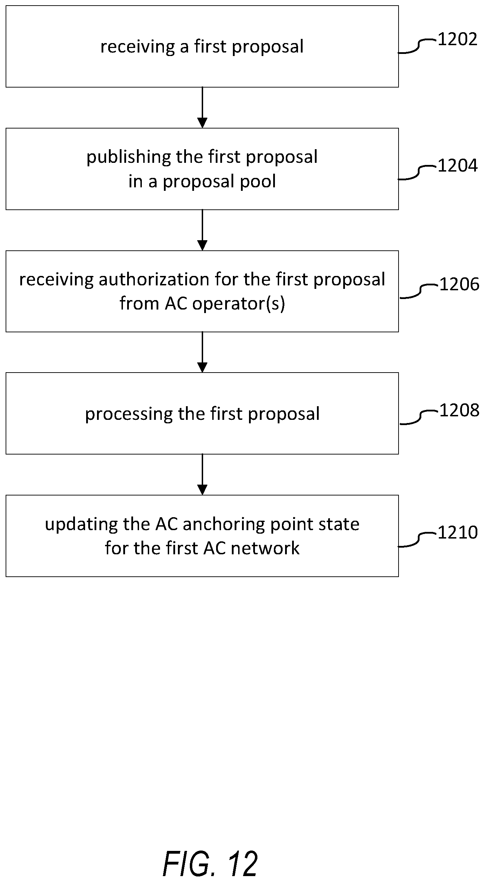

The plurality of AC networks may include a first AC network having a first footprint on the permissionless core. Figure 12 is a schematic diagram illustrating operations for updating a first anchoring point state for the first AC network. These operations include: receiving 1202 a first proposal for a transaction from a first account in the first AC network; publishing 1204 the first proposal in a proposal pool of the permissionless core, the proposal pool being configured to allow AC operators for the plurality of AC networks to monitor proposals; receiving 1206 authorization for the first proposal from at least one AC operator of the first AC network; processing 1208 the first proposal based on the authorization by signing the authorized first proposal; and updating 1210 the AC anchoring point state for the first AC network by building a first transaction record based on the authorized first proposal and posting the first transaction record to the first footprint.

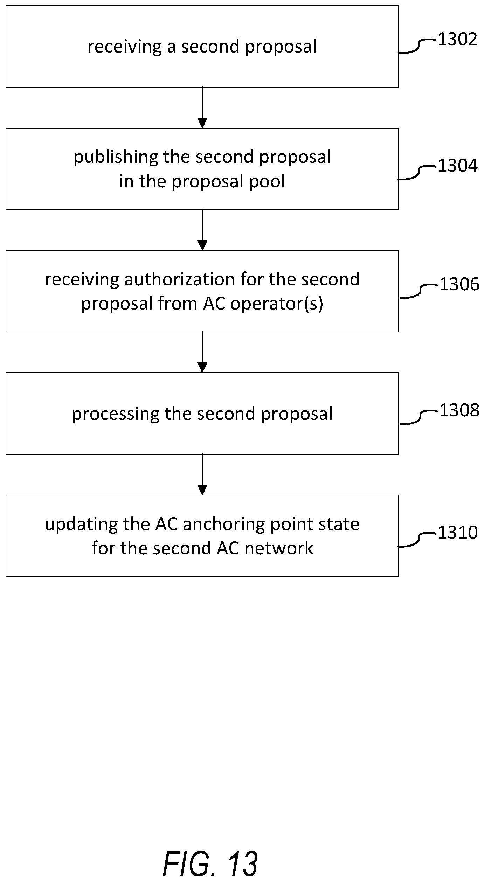

The plurality of AC networks may further include a second AC network having a second footprint on the permissionless core. Figure 13 is a schematic diagram illustrating operations for updating a second AC anchoring point state for the second AC network. These operations include: receiving 1302 a second proposal for a transaction from a second account in the second AC network; publishing 1304 the second proposal in the proposal pool of the permissionless core; receiving 1306 authorization for the second proposal from at least one AC operator of the second AC network; processing 1308 the second proposal based on the authorization by signing the authorized second proposal; and updating 1310 the AC anchoring point state for the second AC network by building a second transaction record based on the authorized second proposal and posting the second transaction record to the second footprint, the second transaction record corresponding to a second transfer transaction exporting a second token amount from the PC network to the second AC network.

It will be appreciated that although described with reference to discrete computing devices, the present disclosure may be implemented by means of a plurality of processors in communication via bus, or via a series of virtual machines operating on one or more processors, or even via separately executing threads on a processor.

Furthermore, reference to value transfer transactions relates not only to cryptocurrency transactions but also, by way of non-limiting example, to fiat currency <-> cryptocurrency transactions and/or transactions concerning other digital assets such as non-fungible tokens, NFTs.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. The computer readable program instructions for carrying out operations of the embodiments of the invention may be, for example, assembly language or either source code or object code is written in any combination of one or more programming languages.

The program code embodied in any of the applications/modules described herein is capable of being individually or collectively distributed as a program product in a variety of different forms. In particular, the program code may be distributed using the computer readable storage medium having the computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other robust state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general-purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more, or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context indicates otherwise. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the general inventive concept.

## Claims

1. A computer-implemented method for communication between networks in a system of networks, the system including a parent chain, PC, network with a permissionless core and a plurality of associate chain, AC, networks to which the PC network is coupled, the method comprising:
maintaining (1102) a data record corresponding to value on the permissionless core of the PC network; and
modelling (1104) footprints of each of the plurality of AC networks as first class objects on the data record to form a consensus,
wherein each footprint has a corresponding AC anchoring point state in the permissionless core, and
wherein each AC network retains one or more AC operators having authority to update the state of the AC anchoring point.

2. The method of claim 1, wherein the plurality of AC networks includes a first AC network having a first footprint on the permissionless core, the method further comprising:
receiving (1202) a first proposal for a transaction from a first account in the first AC network;
publishing (1204) the first proposal in a proposal pool of the permissionless core, the proposal pool being configured to allow AC operators for the plurality of AC networks to monitor proposals;
receiving (1206) authorization for the first proposal from at least one AC operator of the first AC network;
processing (1208) the first proposal based on the authorization by signing the authorized first proposal; and
updating (1210) the AC anchoring point state for the first AC network by building a first transaction record based on the authorized first proposal and posting the first transaction record to the first footprint.

3. The method of claim 2, wherein processing the first proposal is conditional upon receiving authorization for the first proposal from a majority of the one or more AC operators of the first AC network.

4. The method of claim 2 or claim 3, wherein the first transaction record corresponds to a first transfer transaction exporting a first token amount from the first AC network to the PC network.

5. The method of any one of claims 2 to 4, wherein the plurality of AC networks further includes a second AC network having a second footprint on the permissionless core, the method further comprising:
receiving (1302) a second proposal for a transaction from a second account in the second AC network;
publishing (1304) the second proposal in the proposal pool of the permissionless core;
receiving (1306) authorization for the second proposal from at least one AC operator of the second AC network;
processing (1308) the second proposal based on the authorization by signing the authorized second proposal; and
updating (1310) the AC anchoring point state for the second AC network by building a second transaction record based on the authorized second proposal and posting the second transaction record to the second footprint, the second transaction record corresponding to a second transfer transaction exporting a second token amount from the PC network to the second AC network.

6. The method of claim 5, wherein processing the second proposal is conditional upon receiving authorization for the second proposal from a majority of the one or more AC operators of the second AC network.

7. The method of claim 6, wherein the first transaction record extracts value from the first AC network corresponding to the first token amount and the second transaction inserts a further value in the second AC network corresponding to the second token amount,
wherein the first transaction record has a corresponding first footprint transaction in the PC network and the second transaction record has a corresponding second footprint transaction in the PC network, and
wherein the first and second AC networks likewise record the corresponding completion of the first and second transaction respectively.

8. The method of any one of claims 2 to 7, wherein the transactions are selected from a group including create, deposit, and rollup transactions.

9. The method of any preceding claim, wherein the AC footprints are implemented as a combination of transactions and a state tree.

10. The method of any preceding claim, wherein each of the plurality of AC networks comprises a plurality of nodes, each node in a given AC network being connected to at least one other node within said AC network via an intra-chain connection, the method further comprising:
providing a gossip network within each AC network using the intra-chain connections, thereby ensuring that a message sent from any one node is relayed to every other node in the AC network.

11. The method of claim 10, wherein each node in a given AC network is further connected to at least one other node in a different one of the AC networks via an inter-chain connection, the method further comprising:
providing a global gossip network between each AC network using the inter-chain connections, thereby ensuring that a message sent from any one node in any one AC network is relayed to every other node in every other participating AC network.

12. The method of any preceding claim, wherein at least one of the plurality of AC networks is an unregulated system or a regulated system that maintains a fiat currency.

13. The method of any one of claims 5 to 12, wherein the first account in the first AC network and the second account in the second AC network are instances of a single user account.

14. A non-transitory machine-readable medium that stores a set of instructions that, when executed by at least one processor, causes the at least one processor to perform the method of any one of claim 1 to 13.

15. A communication system for facilitating communication between networks in a system of networks, the system of networks including a parent chain, PC, network with a permissionless core and a plurality of associate chain networks to which the PC network is coupled, the communication system comprising:
at least one processor; and
at least one memory configured to store a set of instructions that, when executed by the at least one processor, causes the at least one processor to perform the method of any one of claim 1 to 13.
